## Europäisches Patentamt
## European Patent Office
## Office européen des brevets

(11) Publication number: **0 030 776**
**B1**

# (12) EUROPEAN PATENT SPECIFICATION

(45) Date of publication of patent specification: **10.04.85**

(21) Application number: **80201208.8**

(22) Date of filing: **17.12.80**

(51) Int. Cl.⁴: **F 16 L 59/16**

(54) **A method of providing a mantle tube connection across a joint between heat insulated pipes.**

(30) Priority: **18.12.79 DK 5385/79**

(43) Date of publication of application:
**24.06.81 Bulletin 81/25**

(45) Publication of the grant of the patent:
**10.04.85 Bulletin 85/15**

(84) Designated Contracting States:
**AT BE CH DE FR GB IT LI NL SE**

(56) References cited:
**EP-A-0 029 632**
**DE-C- 930 606**
**NL-A-7 908 598**
**US-A-2 114 145**
**US-A-3 467 410**
**US-A-3 495 854**
**US-A-3 693 665**
**US-A-3 873 139**
**US-A-4 025 091**

(73) Proprietor: **i.c. Moller a/s**
**Treldevej 191**
**DK-7000 Fredericia (DK)**

(72) Inventor: **Thastrup, Ove**
**Fälledvej 50B**
**DK-7000 Fredericia (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

# Description

This invention relates to a method of providing a mantle tube connection across a joint between consecutive prefabricated heat insulated pipe lengths or piping elements of the type specified in the introductory clause of claim 1.

For joining such pipes in situ according to a known method the projecting ends of the conductor pipes are welded together, and an outer connector tube member is mounted above the joint, bridging the space between the ends of the respective outer mantle tubes and overlapping these ends, to which the tube member is tightly connected and sealed by means of a sealing compound between the respective surfaces. It is mandatory that the connection be absolutely watertight, because the pipes in question are normally laid as subterranian pipes, and they should through many years be protected against intrusion of water which would spoil the heat insulation. The mantle tubes are normally made of non-corroding plastics, and the sealing problem, therefore, is mainly connected with the connector tubes at the joints of a pipe system.

A well known type of connector tube is a so-called "sliding sleeve" which is prepositioned on one of the pipe ends to be joined and is pushed axially to bridge the joint once this is established and has been pressure tested, whereafter the sleeve, which is made of a heat shrinkable plastics, is treated so as to shrink about the mantle tube ends and thus be sealingly connected therewith by intermediate of a suitable sealing compound. Earlier it was considered necessary that the mantle tube ends should be able to carry out a relative axial movement under varying temperature conditions, and such a relative movability will normally be secured or maintained by the shrinking of the sleeve, even when it engages the mantle tube ends in a sealing manner. It is unavoidable, however, that such a movability reduces the sealing security when seen over a long period of time.

Later on it was cognized that the total pipe system would in fact not be adversely affected even if the connector sleeves were tightened so strongly about the mantle tube ends that the said relative movability was counteracted or even made impossible. This lead to the construction of a connector tube made as two half-cylindrical muff shells which are tightened together about the mantle tube ends with a sealing pressure which is hardly obtainable by the said shrinking sleeves. The result was a remarkably improved sealing or long time duration of an effective sealing, due to both the increased sealing pressure and the reduced relative movements between the sealed surfaces.

It is a common feature of both these known types of connector tubes that they require the joined pipe lengths to be laid absolutely rectilinear, as even small angular deviations may compromise the required sealing effect.

With the present invention it has been cognized that it is possible to meet the requirement as to an effective sealing, even in a practically absolute manner, and at the same time provide a connection which is easy to produce and which shows considerable advantages, e.g. in allowing for the pipes to be joined to extend in a non-linear manner.

The invention involves a break with the traditional view of the connector tube being a unit placed on the outside of the mantle tube ends. Instead the invention approaches a view of a continuous extension of the mantle tubes across the joint, thus building on the said cognition that the mantle tube ends adjacent the joint should not necessarily be axially movable relative to each other.

The invention is characterized by the use, as a starting member for the mantle tube connection, of a mantle tube member of a diameter substantially equal to the mantle tube diameter and a length somewhat larger than the distance between the edges of said interfacing mantle tube ends, this mantle tube member being cut axially at at least one place, while preparatory to the mounting of the mantle tube member the interfacing mantle tube end portions are cut off along roundgoing lines located such that upon the cutting the distance between the opposed mantle tube end edges will correspond accurately to the length of the mantle tube member, whereafter, upon removal of the cut off tube end portions, the split mantle tube member is mounted flush with the remaining mantle tube ends and is secured edgewise thereto by welding, and the axial split is also closed by welding, wherein the mantle tube member is initially mounted in a temporary position over the joint, endwise overlapping the mantle tube ends, and is thereafter used as a guiding member for cutting these tube ends closely along the end edges of the mantle tube member. The use of a separate connector tube thus provides a connection substantially flush with the mantle tube ends, with which it is joined by welding in an absolutely sealed and rigid manner. This is an ultimate solution not only as far as the sealing is concerned, but even with respect to a complete mutual anchoring of the two mantle tube ends, as the end-to-end joints between these and the tube member will effectively take up even substantial axial forces. On its outside the joint will not constitute any thickening on the mantle tubes, whereby the connector tube member will not be subjected to extra displacement forces should the joint as a whole be displaced in the ground on account of thermally conditioned movements of the pipe.

It is a remarkable advantage of the invention that because the mantle tube parts to be joined are adjusted in situ to fit endwise against each other, the joint will be perfect even if the two pipe lengths or piping elements are not mounted in a rectilinear manner.

According to the invention by using the mantle tube member itself as a guide member for the cutting of the mantle tube ends by mounting the tube member initially and temporarily on the outside of the mantle tube ends, tolerance requirements in the entire joint will be low. It is also preferred to leave the insulation material inside the cut off mantle end portions unspoiled and use the cylindrical surfaces thus exposed as mounting bases for the mantle tube member, which is then very easy to mount in its final position.

Attention is drawn to the document EP—A—0 029 632 as published after the priority date of the present invention. In this document is disclosed a partly similar method, which, however, is different from the method of the present invention in that the length of the gap between the mantle tube ends is independently adjusted to a predetermined standard as also is the length of the connector mantle tube; there is no mention of any in situ adaptation to non-straight pipes.

In the following the invention is described in more detail with reference to the drawing, in which:—

Fig. 1 is a perspective view of a pipe joint,

Fig. 2 a similar view of a connector member, while

Figs. 3—5 are plan views illustrating how the connector member is mounted.

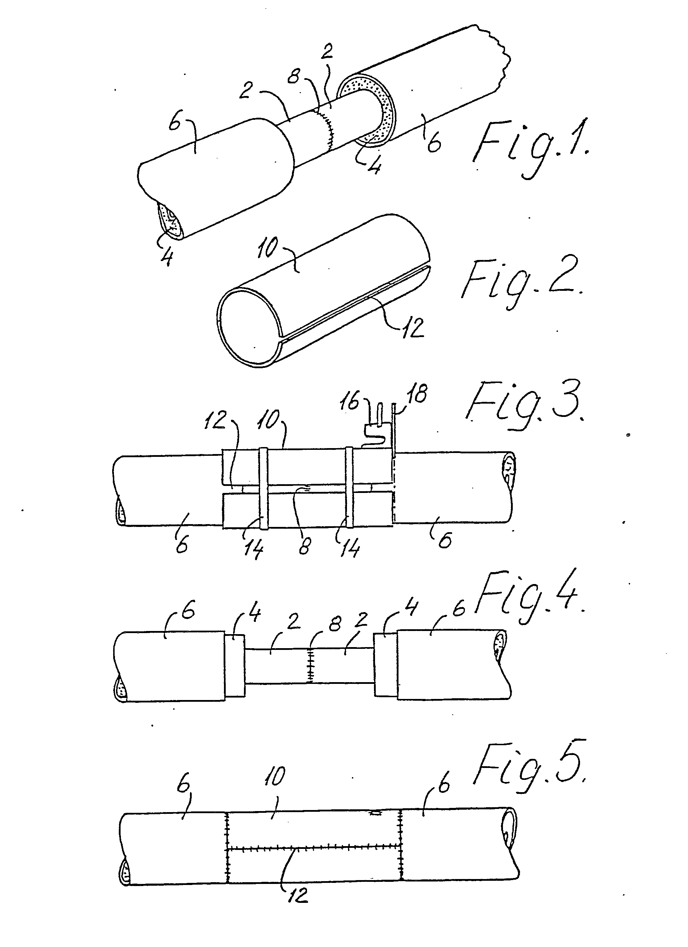

In Fig. 1 is shown the partly joined ends of two insulated pipes each comprising an inner steel conductor pipe surrounded by a rigid insulation material 4 which again is surrounded by an outer mantle tube 6 of a semi-hard plastics. The conductor pipe ends 2 project from the ends of the surrounding parts 4 and 6, and in Fig. 1 the pipe ends 2 have already been joined by welding as shown at 8.

The connector member shown in Fig. 2 is designated 10 and is a cylindric member of the same material and cross dimensions as the mantle tubes 6. It is provided with a single axial split 12 and has a length somewhat larger than twice the standard length of the protruding pipe ends 2, i.e. somewhat larger than the distance between the opposed ends of the mantle tubes 6.

The tube member 10 is now laid about the joint so as to overlap the ends of both mantle tubes 6, as shown in Fig. 3; for this mounting the tube member 10 can be opened resiliently and introduced radially over the joint, or it can be prepositioned as a slide sleeve on one of the pipe lengths to be joined, whereby it is easy to displace into the temporary position shown in Fig. 3. In this position the tube member is clamped about the mantle tube ends by means of clamp straps 14.

Thereafter the circular ends of the tube member are used as guides for a circular saw 16, the blade 18 of which is brought to move closely along the end edge of the tube member all the way round. The cutting depth is so adjusted that the wall of the mantle tubes 6 will just be cut through, without the surface of the insulation material 4 being cut to any substantial degree.

Then the clamp straps 14 are removed and the tube member 10 is removed or displaced sufficiently to enable the operator to remove the cut off end pieces of the mantle tubes 6. The joint will now appear as shown in Fig. 4. The distance between the mantle tube ends will correspond closely to the length of the tube piece 10, irrespective of tolerances in the remaining joint, and from each mantle tube end will project a cylindrical portion of the insulation material 4.

Thereafter the tube member 10 is again placed in its previous position, whereby it will now form a tubular bridge across the joint 8, rested on the projecting insulation portions and generally flush with the mantle tubes 6. The edges of the tube member 10 are in advanced chamfered for butt welding, and the tube member is now secured to the mantle tube ends by welding, as shown in Fig. 5, just as the split 12 is closed by welding. Such welding of the plastic material is relatively easy to carry out with a very high quality, i.e. a durable and completely sealed connection is easily achieved.

Of course, the annular space inside the tube member should be heat insulated. This can be made out by placing a suitable insulation material about the joined pipe ends 2 prior to the final mounting of the tube member 10, but preferably it is done in another well known manner, viz. by pouring into the mounted connector tube member or sleeve through a top hole therein a foaming liquid which will foam up inside the sleeve and eventually form a more or less rigid insulating material filling out the said space, while the said top hole is thereafter closed by any suitable closing means such as a well sealing stopper. The top hole may even be closed by a welding flush with the outside of the tube member 10, but it will be appreciated that it is of secondary importance how this insulation is carried out.

Instead of using the tube member 10 itself as a guide for the cutting of the mantle tube ends it would be possible to use a special jig member for this purpose, but the use of the tube member itself will inevitably increase the accuracy of the work, since even the length of the prefabricated tube member 10 will be subject to tolerances.

The tube member 10 may be prepared so as to have more than one axial split 12, i.e. it could be prepared e.g. as two half cylindrical shelves which would be easy to mount about the joint, but would correspondingly require more than one split to be welded by the final mounting thereof.

It is a very important advantage of the invention that a perfect joint between the mantle tubes is obtainable in a simple manner even if the two pipe lengths or piping elements to be joined are not laid in any exactly rectilinear manner. Even when the tube member 10 is prepared with orthogonally formed end planes it may still be used when the pipes are joined with a considerable deviation from a rectilinear arrangement by cutting the mantle tube ends in planes non-orthogonal to the tube axis, and besides it will be within the scope of the invention to make use of a tube member 10, the end planes of which are prepared oblique to the axial direction for accommodating an expressed non-linear arrangement of the pipe lengths to be joined. If necessary some of the material of the protruding portions of the insulation· material 4 may be rasped away for adaptation to the direction of the tube member 10, and for the same reason it is generally desirable that the protruding length of the exposed insulation material 4 (Fig. 4) be relatively small.

### Claims

1. A method of providing a mantle tube connection across a joint between consecutive prefabricated heat insulated pipe lengths or other piping elements each having an inner conductor pipe (2) surrounded by a substantially rigid insulation material (4) and an outermost protective mantle tube (6), the conductor pipe ends projecting from the ends of the insulation and the mantle tube and being joined in situ with the correspondingly projecting conductor pipe of another pipe length or piping element, the said mantle tube connection being provided in a sealed manner between the interfacing end portions of the mantle tubes adjacent the joint, after or preferably prior to the exposed conductor pipe ends being covered by a heat insulating material, characterized by the use, as a starting member for the mantle tube connection, of a mantle tube member (10) of a diameter substantially equal to the mantle tube diameter and a length somewhat larger than the distance between the edges of said interfacing mantle tube ends, this mantle tube member (10)· being cut axially at at least one place, while preparatory to the mounting of the mantle tube member (10) the interfacing mantle tube end portions are cut off along roundgoing lines located such that up the cutting the distance between the opposed mantle tube end edges will correspond accurately to the length of the mantle tube member (10), whereafter, upon removal of the cut off tube end portions, the split mantle tube member is mounted flush with the remaining mantle tube ends and is secured edgewise thereto by welding, and the axial split is also closed by welding, wherein the mantle tube member (10) is initially mounted in a temporary position over the joint, endwise overlapping the mantle tube ends, and is thereafter used as a guiding member for cutting these tube ends closely along the end edges of the mantle tube member (10).

2. A method according to claim 1, characterized in that the mantle tube end portions in a non-linear pipe joint are cut in a plane which is nonorthogonal to the tube direction so as to be joinable with the end edges of the mantle tube member (10) having orthogonal end planes.

3. A method according to claim 1 or 2, characterized in that both of the opposed mantle tube end portions are cut so as to expose, upon removal of the cut off ends, a projecting length of the underlying insulation material (4), the cylindrical surface of which is used as a mounting base for the mantle tube member.

### Patentansprüche

1. Verfahren zur Herstellung von Mantelrohrverbindungen über eine Schweissnaht zwischen aufeinanderfolgenden vorgefertigten wärmeisolierten Rohrstücken oder anderen Rohrleitungselementen, die je ein inneres Leiterrohr (2) aufweisen, das von einem im wesentlichen starren Isoliermaterial (4) und einem aussenliegenden Mantelschutzrohr (6) umgeben ist, wobei die Enden des Leiterrohres an den Enden der Isolation und des Mantelrohres vorstehen und dort mit dem entsprechend vorstehenden Leiterrohr eines anderen Rohrstückes oder Rohrleitungselements verschweisst werden, und die genannte Mantelrohrverbindung abdichtend zwischen den aneinander grenzenden Endteilen der Mantelrohre im Bereich der Schweissnaht angeordnet wird, und zwar nachdem oder vorzugsweise bevor die freiliegenden Leiterrohrenden mit einem wärmeisolierenden Material überzogen werden, dadurch gekennzeichnet, dass als Ausgangselement für die Mantelrohrverbindung ein Mantelrohrelement (10) verwendet wird, dessen Durchmesser im wesentlichen gleich dem Mantelrohrdurchmesser ist, und dessen Länge etwas grösser als der Abstand zwischen den Kanten der genannten angrenzenden Mantelrohrenden ist, welches Mantelrohrelement (10) achsial an mindestens einer Stelle eingeschnitten wird, während vor der Montage des Mantelrohrelements (10) die angrenzenden Mantelrohrendteile abgeschnitten werden, und zwar längs derart angeordneter Kreislinien, dass beim Schneiden der Abstand zwischen den gegenüberliegenden Mantelrohrendkanten genau der Länge des Mantelrohrelements (10) entspricht, worauf beim Entfernen der abgeschnittenen Rohrendteile das aufgeschlitzte Mantelrohrelement in einer Ebene mit den verbleibenden Mantelrohrenden angeordnet und durch Schweissen kantenweise daran befestigt wird, und der Achsialschlitz auch durch Schweissen geschlossen wird, wobei das Mantelrohrelement (10) anfangs in einer zeitweiligen Lage über die Schweissnaht angeordnet wird, indem es die Mantelrohrenden in Längsrichtung überlappt, und danach als Führungselement verwendet wird, um diese Rohrenden dicht an den Endkanten des Mantelrohrelements (10) abzuschneiden.

2. Verfahren nach Anspruch 1, dadurch gekennzeichnet, dass die Mantelrohrendteile in einer nichtlinearen Rohrschweissnaht in einer Ebene geschnitten werden, die nichtorthogonal zu der Rohrrichtung ist, um mit den Endkanten des orthogonale Endflächen aufweisenden Mantelrohrelements (10) verbunden werden zu können.

3. Verfahren nach Anspruch 1 oder 2, dadurch gekennzeichnet, dass beide gegenüberliegende Mantelrohrendteile geschnitten werden, um beim Entfernen der abgeschnittenen Enden ein vorstehendes Stück des untenliegenden Isoliermaterials (4) freizulegen, dessen zylindrische Fläche als Montagebasis für das Mantelrohrelement verwendet wird.

## Revendications

1. Une méthode d'effectuer une connexion de tuyau à manteau sur un joint entre des sections de tuyau consécutives, préfabriquées et isolées à la chaleur ou d'autres éléments du tuyautage, chacun ayant un tube conducteur intérieur (2) entouré d'un matériau d'isolation substantiellement rigide (4) et d'un tuyau à manteau de protection extérieur (6), les bouts du tuyau conducteur sortant des bouts de l'isolation et du tuyau à manteau, et étant raccordés in situ au tuyau conducteur également saillant d'une autre section de tuyau ou d'élément de tuyautage, alors que ladite connection de tuyau à manteau est disposée d'un façon scellée entre les portions en bout d'interface des tuyaux à manteau à proximité du joint, après ou de préférence avant que les bouts du tuyau conducteur exposés soient couverts par un matériau isolant à la chaleur, caractérisée en ce qu'on utilise comme élément de départ pour la connexion de tuyau à manteau un élément de tuyau à manteau (10) ayant un diamètre substantiellement égal au diamètre du tuyau à manteau et ayant une longueur légèrement supérieure à la distance entre les bords desdits bouts de tuyau à manteau d'interface, ledit élément de tuyau à manteau (10) étant découpé axialement au moins à un endroit, alors qu'avant le montage de l'élément de tuyau à manteau (10), les portions en bout du tuyau à manteau d'interface sont découpées suivant des lignes circulaires situées de telle sorte que, pendant le découpage, la distance entre les bords en bout du tuyau à manteau opposés correspondra exactement à la longeur de l'élément de tuyau à manteau (10), après quoi, durant l'enlèvement des portions en bout du tuyau découpées, l'élément de tuyau à manteau tendu est assemblé à fleur des bouts de tuyau à manteau restants et y est fixé de champ par soudage, et le clivage axial est également fermé par soudage, alors que l'élément de tuyau à manteau (10) est monté initialement dans une position temporaire sur le joint, ainsi recouvrant les bouts de tuyau à manteau longitudinalement, et est utilisé ensuite comme un élément de guidage pour découper lesdits bouts de tuyau, suivant de près les bords en bout de l'élément de tuyau à manteau (10).

2. Une méthode selon la revendication 1, caractérisée en ce que les portions en bout du tuyau à manteau dans un joint de tuyau non-linéaire sont découpées dans un plan non-orthogonal à la direction du tuyau, afin d'être raccordées aux bords d'about de l'élément de tuyau à manteau (10) ayant des surfaces terminales orthogonales.

3. Une méthode selon la revendication 1 ou 2, caractérisée en ce que les deux portions de tuyau à manteau opposées sont découpées pour exposer, lors de l'enlèvement des bouts découpés, une longueur saillante du matériau d'isolation sous-jacent (4), dont la surface cylindrique est utilisée comme une base de montage pour l'élément de tuyau à manteau.

Fig.1.

Fig.2.

Fig.3.

Fig.4.

Fig.5.